# FASCICULE DE BREVET EUROPEEN

(11) **EP 0 944 665 B1**
(45) Date de publication et mention de la délivrance du brevet: **03.03.2004**
(21) Numéro de dépôt: 98949062.8
(22) Date de dépôt: 14.10.1998
(51) Int. Cl.: C08G 65/24, C08L 71/03, H01M 10/40

(54) **NOUVEL ELECTROLYTE POLYMERE SOLIDE ET ENSEMBLE ELECTROCHIMIQUE MULTICOUCHE COMPRENANT UN TEL ELECTROLYTE POLYMERE SOLIDE**
FESTPOLYMERELEKTROLYT UND MEHRSCHICHTIGE ELEKTROCHEMISCHE BAUELEMENTE ENTHALTEND DIESEN POLYELEKTROLYT
NOVEL SOLID POLYMER ELECTROLYTE AND MULTILAYER ELECTROCHEMICAL ASSEMBLY COMPRISING SUCH A SOLID POLYMER ELECTROLYTE

(30) Priorité: 16.10.1997 FR 9712952
(43) Date de publication de la demande: 29.09.1999
(73) Titulaire: ELECTRICITE DE FRANCE, 75008 Paris (FR)
(72) Inventeur: LASCAUD, Stéphane, F-77300 Fontainebleau (FR); BAUDRY, Paul, F-77250 Veneux les Sablons (FR); GRAMAIN, Philippe, F-34980 Saint Gely du Fosc (FR)
(74) Mandataire: Ahner, Francis
(86) Numéro de dépôt international: PCT/FR1998/002206
(87) Numéro de publication internationale: WO 1999/020677

(56) Documents cités:
- EP-A- 0 004 087
- EP-A- 0 657 484
- US-A- 3 757 088
- DATABASE WPI Section Ch, Week 9043 Derwent Publications Ltd., London, GB; Class A25, AN 90-326161 XP002072618 & JP 02 235957 A (DAISO CO LTD)
- DATABASE WPI Section Ch, Week 9227 Derwent Publications Ltd., London, GB; Class A35, AN 92-221942 XP002072619 & JP 04 145145 A (POLYTECH DESIGN KK)
- CHEMICAL ABSTRACTS, vol. 125, no. 20, 11 novembre 1996 Columbus, Ohio, US; abstract no. 249230a, WOLFENSON A.E. ET AL: "C13 and Conductivity measurements of ethylene oxide -epichlorohydrin copolymer dopede with LiClO4" page 60; XP002072617 & SOLID STATE IONICS, vol. 85, no. 1-4, 1996, pages 219-223,

## Description

La présente invention est relative à de nouveaux électrolytes polymères solides (EPS en abrégé) et aux ensembles électrochimiques pourvus de tels électrolytes polymères solides.

Les ensembles électrochimiques pourvus d'électrolytes aqueux sont bien connus. Des exemples de tels ensembles comprennent les traditionnelles piles Leclanché, les piles Ni-Cd, Ni-Zn, Zn-MnO₂, Ni-H₂ et Pb acide. Ces ensembles typiquement comprennent une électrode positive (cathode), une électrode négative (anode), un électrolyte aqueux liquide et un séparateur solide. Le séparateur est présent pour prévenir toute décharge qui serait provoquée par le contact entre les deux électrodes.

On sait que la présence d'un séparateur entraîne certains inconvénients tels que l'éventuelle incompatibilité chimique avec l'électrolyte d'où une réduction de la durée de vie des batteries, la diminution de l'impédance de la cellule électrochimique, la complexité de mise en oeuvre.

C'est pourquoi on a proposé depuis de nombreuses années de remplacer les électrolytes liquides par des électrolytes solides polymères qui présentent l'avantage de supprimer la présence du séparateur.

De nombreuses études ont été effectuées à ce sujet.

Ainsi, par le brevet français no 2 442 5 13, il est connu un électrolyte de ce type dans lequel la matrice comporte en partie ou en totalité des homo et/ou copolymères, essentiellement à chaînes non réticulées, dérivées d'un ou plusieurs monomères comportant un hétéroatome apte à former des liaisons du type donneur-accepteur avec le cation du sel ionisable.

Cependant, le complexe formé présente une forte tendance à cristalliser (diminution de la labilité entre chaînes), à une température qui se trouve au-dessous de la température de fusion des cristallites (située généralement aux environs de 60°C), ce qui réduit notablement la mobilité ionique à l'intérieur même du réseau. Par ailleurs, il ne peut être aisément réticulé pour éviter le fluage.

La conséquence de cette cristallisation est une diminution importante de la conductivité ionique, diminution qui oblige donc à utiliser ces électrolytes solides polymères au-dessus de la température de fusion des zones cristallines pour obtenir une conductivité ionique suffisante.

Il est également connu, notamment par la demande de brevet européen n° 0 037 776, d'utiliser pour constituer le polymère complexant des polymères ou oligomères réticulés, en particulier chimiquement, présentant une température de transition vitreuse aussi basse que possible.

Cependant, de tels polymères se révèlent peu utilisables dans le cadre de leurs applications à température ambiante en tant qu'électrolytes solides dans les générateurs électrochimiques du fait de leur faible conductivité ionique et de l'instabilité des liaisons de réticulation vis-à-vis des électrodes, en particulier de l'électrode négative ; c'est notamment le cas des liaisons de réticulation chimique di, tri ou multi-isocyanates vis-à-vis du lithium qui les réduit.

La demande de brevet européen n° 0 078 505 décrit un électrolyte polymère solide formé d'un sel ionisable, d'un polymère complexant et d'un polymère intermiscible avec ledit polymère complexant, et qui est réticulé, le polymère complexant étant porté dans un état essentiellement amorphe durant cette opération de réticulation.

Le polymère complexant est notamment un polyéther. Le polymère intermiscible est notamment un élastomère.

La demande de brevet européen n° 0 119 912 décrit un copolymère de l'oxyde d'éthylène et d'un deuxième motif monomère choisi parmi les éthers-oxydes cycliques substitués.

D'autres électrolytes polymères solides ont également été proposés.

Le brevet US 5 030 527 décrit un polymère réticulable par rayonnement tels que les polymères acryliques, les polymères de l'alcool vinylique, les polymères époxy, les polyimines.

Le brevet européen n° 0 657 484 décrit un copolyéther réticulable par voie radicalaire, comprenant des substituants éthyléniques, utilisable pour la réalisation d'un électrolyte solide.

Le brevet US 3 969 147 décrit un électrolyte polymère solide formé d'un mélange d'amidon et d'amidon réticulé.

Le brevet US 5 424 150 décrit un électrolyte polymère solide formé d'un copolymère d'éthylène et d'un monomère ester de l'alcool vinylique saponifié sur lequel a été greffé un polyoxyéthylène.

L'abrégé du brevet japonais JO 2235957 décrit un électrolyte solide non réticulé formé d'un copolymère épichlorhydrine-éthylène oxyde et d'un sel de métal alcalin.

L'abrégé du brevet japonais JO 4145145 décrit un électrolyte liquide imprégné dans un caoutchouc du type épichlorhydrine.

L'objet de la présente invention est de proposer un nouvel électrolyte polymère solide à conduction ionique présentant une conductivité élevée.

Un autre objet de la présente invention est de proposer un électrolyte polymère solide dont la tenue mécanique est améliorée par suppression du fluage tout en maintenant une conductivité ionique suffisante.

Il faut rappeler à ce propos que les propriétés de conductivité ionique des EPS selon l'invention n'ont aucune relation avec les propriétés de conductivité électronique de certains matériaux chargés avec du noir de carbone tels que ceux décrits dans US 3 757 088.

Un autre objet de la présente invention est de proposer un électrolyte polymère solide dont les dégradations chimiques, mécaniques et thermiques par coupure de chaînes pouvant advenir lors de l'utilisation du système de stockage électrochimique sont considérablement ralenties. La durée de vie de l'ensemble électrochimique est augmentée.

Un autre objet de la présente invention est de proposer un électrolyte polymère solide dont la cristallinité de l'électrolyte est supprimée ou réduite tout en conservant une faible température de transition vitreuse. Ceci permet d'abaisser la température de fonctionnement du système de stockage électrochimique et en particulier son utilisation à température ambiante tout en conservant une bonne conductivité.

L'invention concerne en premier lieu un électrolyte polymère solide, caractérisé en ce qu'il comprend d'une part une matrice formée, au moins en partie, de copolymère réticulé comprenant des motifs dérivés de l'oxyde d'éthylène et des motifs dérivés de l'oxyde d'éthylène substitués par un radical réactif par substitution et dont au moins une partie participe à la liaison de réticulation, d'autre part au moins un sel alcalin ionisable complexé dans ladite matrice.

Par l'expression « motif dérivé de l'oxyde d'éthylène », on entend le motif ―CH₂―CH₂―O―. Par l'expression « radical réactif par substitution », on entend un radical porteur d'un groupe réactif partant sous l'action d'un agent nucléophile (substitution nucléophilique), par exemple on cite un radical chlorométhyle, bromométhyle, iodométhyle.

On cite également les radicaux du type ―CH=CH―CH₂Hal dont la double liaison est stable lors de la réticulation.

Comme autres groupes réactifs, on cite SH, CN, OH, -N₃, pyridine, PhO, -AcO, NO₃.

Les motifs dérivés de l'oxyde d'éthylène substitué par un radical réactif par substitution et participant à la liaison de réticulation proviennent de la copolymérisation notamment avec l'oxyde d'éthylène de monomères de formule : 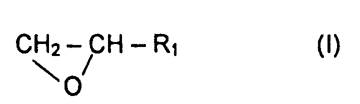 dans laquelle R₁ est donc notamment chlorométhyle, bromométhyle, iodométhyle bien que R₁ puisse avoir d'autres significations comme indiqué ci-dessus.

Il faut donc comprendre que l'expression « motifs dérivés de l'oxyde d'éthylène substitué par un radical réactif par substitution et dont au moins une partie participe à la liaison de réticulation » correspond à la formule :

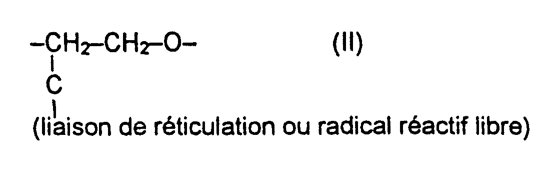

Outre les deux motifs précités, le copolymère réticulé peut comprendre d'autres motifs, notamment des motifs dérivés de l'oxyde d'éthylène substitué par un groupe similaire à celui qui participe à la liaison de réticulation mais qui est sous forme libre (cf. formule ci-dessus). C'est-à-dire qu'après réticulation, compte tenu des conditions de réticulation, ces groupes n'ont pas réagi. Dans le cas où lesdits groupes sont du type CH₂Hal, ils seront de préférence transformés en groupes de faible encombrement stérique du type amine ou thioéther.

Mais également on peut citer d'autres groupes qui par leur nature vont participer au transport des ions et qui du fait de leur flexibilité vont abaisser le Tg de l'ensemble et éventuellement leur cristallinité pour faciliter la mise en oeuvre par extrusion. C'est le cas par exemple des groupes comprenant un ou plusieurs oxydes d'alkylène du type (CH₂-CH₂O)ₙ.

De ce fait, on obtient des polymères de faible cristallinité ou amorphe et comportant des liaisons de réticulation (propriété mécanique, stabilité) et des liaisons de « greffage » à des groupements monofonctionnels (substitution sur les groupes R₁ restant et abaissement du Tg). Les agents réticulants ainsi que les groupements monofonctionnels sont donc choisis pour leur réactivité nucléophile.

Par l'expression « copolymère », on entend que le polymère peut comprendre outre les deux motifs précédemment décrits, un ou plusieurs autres motifs différents. Le terme « copolymère » inclut donc particulièrement les terpolymères comprenant des motifs dérivés de l'oxyde d'alkylène (C₃₋C₆), le radical C₁₋C₄ alkyle permettant d'améliorer certaines propriétés mécaniques ou thermiques, sans affecter substantiellement les propriétés de conduction ionique. Comme motif, on cite notamment le dérivé de l'oxyde de propylène et en général les dérivés des oxydes de formule :

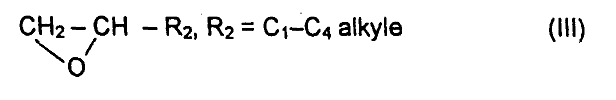

De préférence, ledit copolymère réticulé résulte de la réticulation d'un copolymère statistique de formule :

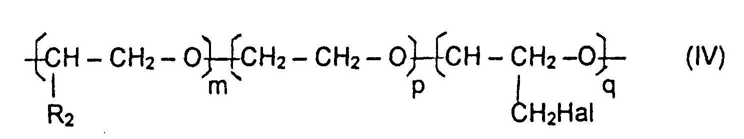

De préférence en pourcentage en mole:
p est compris entre 50 et 97 %, de préférence 50 et 95 %,
q est compris entre 3 et 50 %, de préférence 5 et 50 %
m est compris entre 0 et 10 %.

Avantageusement en pourcentage en mole:
p est compris entre 70 et 95 %, q est compris entre 5 et 30 %.

Le taux de réticulation devra être suffisant pour assurer la cohésion et la tenue mécanique de l'électrolyte polymère solide et éviter la cristallisation à température ambiante mais il ne devra pas être trop élevé afin de ne pas freiner la mobilité des cations au travers de l'électrolyte polymère solide.

Il est préférable pour des raisons de conduction ionique de remplacer les atomes d'halogène restant, notamment le chlore, soit avant, soit après réticulation, par un groupement de plus faible encombrement stérique, permettant notamment d'abaisser la température de transition vitreuse du matériau (Tg) et capable notamment de complexer les métaux alcalins. Ce sera par exemple un groupement de formule :

CH₃―(O-CH₂-CH₂)ₙ₁―X (V)

où X est un groupe nucléophile, par exemple X = SH, NH₂, pyridine, pipéridine, pipérazine, tosyle, ni = 1 à 10.

De ce fait lorsque, la proportion de motifs 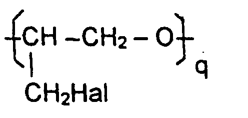 est supérieure à 20 % (entre 20 et 50 %), la réticulation et notamment la quantité d'agent réticulant sera adaptée pour que, de préférence, 5 à 20 % de ces motifs participent à la réticulation.

Une variante préférée consiste donc à réaliser un copolymère de formule IV dans laquelle q est compris entre 3 et 20 % et p entre 80 et 97 %, de préférence 5 et 20 % et 80 et 95 % respectivement.

De préférence l'épihalohydrine est l'épichlorhydrine et Hal correspond donc à l'atome de chlore.

L'agent réticulant est avantageusement choisi dans le groupe des réticulants nucléophiles réagissant avec le radical R₁, de préférence CH₂Hal avec libération d'acide d'halogénure, notamment HCl.

L'agent de réticulation est habituellement di- ou trifonctionnel ou plurifonctionnel.

Parmi les agents réticulants, on cite les réticulants comprenant au moins deux fonctions thiol, avantageusement l'acide trithiocyanurique commercialisé notamment sous la marque Zysnet® et répondant à la formule: 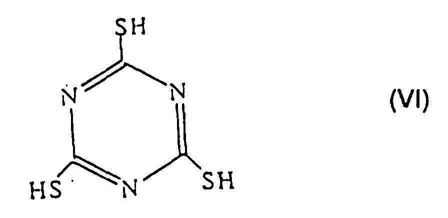 ou les agents réticulants comprenant au moins deux fonctions amine, avantageusement des composés du type bis (aminopropyl éther), notamment ceux du type commercialisé sous la marque Jeffamine®, les diazaether-couronnes. Tous ces agents de réticulation sont connus de l'homme du métier.

Parmi les diamines, on cite notamment les diamines de formule Y―(EO)ₙ₂―Y dans laquelle Y est un radical NH₂, pyridine, piperazine, piperidine. Le radical E est un radical éthylène ou propylène. On cite notamment les diamines où -(EO)ₙ₂- est une chaîne polyéthylène glycol-polypropylène glycol block, n₂ variant de 5 à 20.

La réaction de réticulation est initiée thermiquement. Le taux de réticulation est contrôlé par la quantité d'agents de réticulation, la température et la durée de l'exposition. Typiquement en présence de 0,1% de Zysnet, ou de Jeffamine®, le domaine de température est compris entre 100°C et 200°C et la durée du traitement est comprise entre 5 et 20 minutes (cas du Zysnet) ou jusqu'à 60 minutes (Jeffamine®).

L'électrolyte peut comporter un accélérateur de réticulation tel que la diphényl guanidine ou un ralentisseur de réticulation tel que la N-(cyclohexylthio) -phtalimide.

L'électrolyte peut comporter en outre un additif monofonctionnel préférentiellement du type mercaptan ou du type amine, capable de réagir avec les radicaux agents de réticulation en surnombre de la chaîne polymère durant, avant ou après le traitement de réticulation. Les additifs seront avantageusement choisis parmi ceux qui permettent d'abaisser la température de transition vitreuse du matériau et seront de plus des composés comportant des séquences éthylène oxyde complexant les ions alcalins. En particulier, l'additif pourra être avantageusement cristallisable de manière à faciliter la mise en oeuvre du matériau sans trop affecter la mobilité des chaînes. Cela pourra être une amine primaire substituée par une chaîne polyalkylène glycol.

De préférence, le copolymère réticulé résulte de la réticulation du copolymère de formule IV, par 1 à 10 moles d'agent réticulant trivalent pour 1000 équivalents d'atomes d'halogène.

Selon une autre variante préférée, le copolymère réticulé résulte de la réticulation du copolymère de formule IV par une proportion d'agent réticulant diamine telle que le rapport équivalent molaire radical réactif par substitution/équivalent molaire radical amine soit inférieur ou égal à 1, de préférence compris entre 0,5 et 1.

L'électrolyte polymère solide comprend également d'autres charges telles que MgO, Al₂O₃, CaO, Li₂CO₃, CaCO₃. Les carbonates de lithium ou de calcium sont présents pour absorber l'acide libéré, notamment l'acide chlorhydrique.

L'électrolyte peut également être chargé par des fibres ou des microbilles de verre.

Parmi les anions associés aux cations métalliques alcalins, on cite notamment les perfluorosulfonates, les perfluorosulfonates imidures, BF₄-, PF₆-, AsF₆-, ClO₄, SCN-, I-, Br-, (C₆H₅)₄ B- ainsi que ses dérivés, BCl₄-. De préférence l'électrolyte polymère solide comprend 1 à 100 g de sel alcalin ionisable pour 100 g de copolymère, de préférence entre 2 et 20 g pour 100 g de copolymère.

Selon une autre façon, le sel est incorporé dans l'électrolyte dans une proportion en mole oxyéthylène/cation alcalin comprise entre 5 et 100.

De préférence, le cation métallique est un cation de lithium.

Selon un mode de réalisation, les films d'électrolyte polymère solide sont préparés à partir de copolymère contenant tous les autres additifs mentionnés ci-dessus, notamment une ou plusieurs charges, l'agent réticulant, éventuellement un accélérateur de réticulation, éventuellement un additif préférentiellement du type mercaptan ou diamine.

On ajoute à ce mélange le sel alcalin ionisable, puis le film d'électrolyte polymère est mis en forme, notamment par extrusion.

Après la mise en forme l'électrolyte polymère est calandré à chaud suivi d'une réaction de greffage ou de réticulation thermique.

Selon un autre mode de réalisation, le mélange précédent est mis en solvant puis mis en forme par enduction.

Le film est déposé, soit par enduction, soit par extrusion à une épaisseur comprise notamment entre 20 µm et 100 µm.

La fin de la réticulation est suivie par tests de solubilisation dans un solvant approprié, notamment le dichlorométhane.

La température et la durée de la réticulation sont limitées par la stabilité thermique des copolymères. Il est bien entendu que l'homme du métier sera à même de déterminer les conditions particulières à chaque copolymère.

Habituellement, cette température ne devra pas dépasser 200°C et la durée de réticulation sera de l'ordre de quelques minutes jusqu'à 30 minutes par exemple.

On prendra soin notamment à ce que le taux de réticulant introduit dans les films ne dépasse pas la quantité d'halogène, notamment de chlore présent dans les copolymères. Il est bien entendu que le taux de réticulation sera fonction de la quantité d'agent réticulant présente ainsi que de la proportion de motifs dérivés de l'épihalohydrine dans le copolymère.

Pour donner une estimation du taux de réticulation, on peut notamment suivre le taux de gonflement (TG) d'échantillons de la même dimension. Le TG est défini par la formule: TG = (M₁ - Mₒ)/Mₒ, Mₒ et M₁ étant les masses du film réticulé sec et mouillé de solvant, respectivement.

Alors que la température de transition vitreuse d'un polyoxyde d'éthylène est de l'ordre de -59°C, les températures de transition vitreuse des électrolytes polymères solides selon la présente invention sont généralement inférieures à -40°C ou même à -50°C ce qui constitue déjà une propriété remarquable.

Alors que le taux de cristallinité d'un polyoxyde d'éthylène est généralement de 60 %, le taux de cristallinité des électrolytes polymères solides selon l'invention est généralement inférieur à 40 % et de préférence entre 0 et 30 %.

Les copolymères de départ sont préparés selon les méthodes bien connues de l'homme du métier. Des modes de réalisation précis sont indiqués dans les exemples décrits à la suite de cette description. Bien entendu, l'invention n'est pas limitée à des copolymères particuliers. On pourra utiliser des copolymères commercialisés notamment sous les marques HYDRIN ou EPICHLOMER des sociétés Zeon France ou Siber Hegner & Cie France.

Les électrolytes polymères solides selon l'invention sont remarquables :
- en ce qu'ils présentent une conductivité supérieure à 5.10⁻⁶ avantageusement à 5.10⁻⁵ S.cm⁻¹ à une température supérieure à 20°C due notamment au fait que la cristallisation a été empêchée en raison de la présence dans le copolymère de motifs dérivés de l'épihalohydrine, et de R₂ éventuellement,
- en ce qu'ils présentent des propriétés mécaniques et une stabilité dimensionnelle et au vieillissement élevées dues au procédé de réticulation,
- en ce que le greffage sur ces motifs de l'agent de réticulation et/ou de l'additif abaisse la température de transition vitreuse.

Les propriétés électrochimiques sont mesurées de manière connue et un exemple de mesure est indiqué dans les exemples ci-après.

L'invention concerne également un ensemble électrochimique multicouche formé d'une électrode positive et de son collecteur de courant, de l'électrode négative et éventuellement de son collecteur de courant, lesdites électrodes étant séparées par un électrolyte polymère solide selon l'invention.

Dans le cas de l'électrode négative, on peut avoir recours à tout composé capable de libérer un ion de métal alcalin, de préférence le lithium, à son interface avec l'électrolyte polymère.

L'électrode négative peut être constituée de lithium et dans ce cas, 5 un collecteur de courant n'est pas associé à ladite électrode.

L'électrode positive selon une variante préférée peut consister en un matériau composite de préférence sensiblement homogène, de la matière active, d'un composé inerte à conduction électronique favorisant le transfert des charges électriques vers le collecteur tel que le graphite ( ou le noir d'acétylène) et de la matrice polymérique selon l'invention.

En ce qui concerne l'électrode positive, on fera appel à tout composé mixte ou composé intercalaire comprenant des composés ou sel d'un métal de transition alcalin possédant une forte activité électronique à l'égard des métaux alcalins et susceptibles d'imposer à ceux-ci, lorsqu'ils sont à l'état ionisé, un potentiel chimique faible vis-à-vis de celui qu'il présente lorsqu'il se trouve à l'état métallique.

Selon une variante avantageuse, l'électrode positive est une électrode composite comprenant du carbone, une matière active à base d'un métal de transition et une matrice d'un électrolyte polymérique.

Parmi les matières actives, on peut citer avantageusement l'oxyde de vanadium, l'oxyde de manganèse, l'oxyde de nickel, l'oxyde de cobalt, un mélange de ces matières actives.

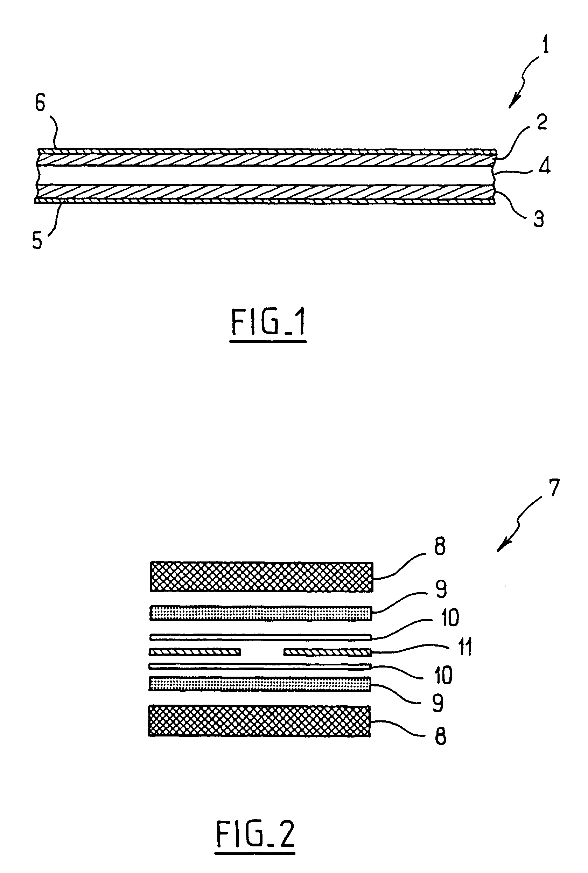

Selon la figure 1 annexée, un ensemble multicouche 1 en coupe transversale schématique est formé d'un électrolyte polymère solide 4 en sandwich entre une couche d'électrode positive 2 et négative 3, chaque électrode étant recouverte d'un collecteur respectivement 5 et 6.

Les exemples ci-dessous illustrent l'invention et ne sauraient en aucune façon limiter la portée de l'invention.

### A - Préparation des copolymères des électrolytes polymères solides

### Exemple 1

### Synthèse du copolymère 1 comprenant 85.4 % de motifs dérivés de l'oxyde d'éthylène (OE) et 14.6 % de motifs dérivés de l'épichlorhydrine (EC).

La synthèse a été réalisée dans un réacteur équipé d'une cuve en acier inoxydable pouvant travailler sous une pression maximum de 15.10⁵ Pa (15 bars) du type Büro.

L'oxyde d'éthylène est fourni par British Petroleum (Unité de Lavera, France) et l'épichlorhydrine est fournie par Merck.

La polymérisation est effectuée à l'aide du catalyseur de Vandenberg AlEt₃ - 0,5 H₂O - 0,5 acétylacétone (AcAc) préparé de manière connue. Le catalyseur se présente sous forme d'une solution claire de couleur jaune.

La polymérisation est une polymérisation en solution dans le toluène catalysée par le système AEt₃ - 0,5 H₂O - 0,5 AcAc.

Le solvant (toluène), le catalyseur puis l'épichlorhydrine sont introduits par la vanne d'introduction. Le toluène est introduit par l'intermédiaire d'un entonnoir. Pour introduire le catalyseur, on place le ballon sous azote. On crée ainsi une surpression empêchant l'air de dégrader le catalyseur. On place également une pipette et une propipette sous azote. Le catalyseur est ensuite prélevé et versé par la vanne d'introduction dans le réacteur. On effectue la même opération avec l'épichlorhydrine (conservé dans un ballon, sous azote).

L'oxyde d'éthylène (conservé dans une bouteille, sous pression) est introduit à l'aide d'un capillaire directement relié au réacteur. On suit la quantité d'oxyde introduite par une balance placée sous la bouteille.

On met sous agitation (environ 900 tours/minutes) et on porte le mélange à une température d'environ 107°C. On laisse réagir et on soutire après refroidissement le mélange visqueux puis on traite le soutirat.

On désactive le catalyseur à l'aide d'éthanol absolu. En théorie, la stoechiométrie est de 3 alcools pour 1 aluminium. En pratique, on ajoute environ 5 alcools pour 1 aluminium. On ajoute un antioxydant, on précipite le soutirat dans un mélange essence-éther (l'éther sert à extraire l'épichlorhydrine qui n'a pas réagit). On sèche le copolymère obtenu qui présente les caractéristiques suivantes :
- motifs dérivés de l'éthylène oxyde (en mole) 85,4 %
- motifs dérivés de l'épichlorhydrine 14,6%
- Tg - 49°C
- Tm 36°C
- % cristallinité 13,5

### Exemple 2

### Synthèse du copolymère 2 comprenant 87.9 % de motifs dérivés de l'oxyde d'éthylène (OE) et 12.1 % de motifs dérivés de l'épichlorhydrine (EC).

Mis à part les proportions respectives de OE et EC, la méthode de préparation est identique à celle de l'exemple 1.

Le copolymère 2 présente les caractéristiques suivantes :
- motifs dérivés de l'éthylène oxyde (en mole) 87,9 %
- motifs dérivés de l'épichlorhydrine 12,1%
- Tg -56°C
- Tm 45,4°C
- % cristallinité 13,6

### Exemple 3

### Synthèse du copolymère 3 comprenant 89.8 % de motifs dérivés de l'oxyde d'éthylène (OE) et 10 2 % de motifs dérivés de l'épichlorhydrine (EC)

Mis à part les proportions respectives de OE et EC, la méthode de préparation est identique à celle de l'exemple 1.

Le copolymère 3 présente les caractéristiques suivantes:
- motifs dérivés de l'éthylène oxyde (en mole) 89,8 %
- motifs dérivés de l'épichlorhydrine 10.2 %
- Tg - 51,8°C
- Tm 46°C
- % cristallinité 11,5

### Exemple 4

Ce copolymère 4 est fourni par Zeon France (Hydrin 2000® et présente les caractéristiques suivantes:
- motifs dérivés de l'éthylène oxyde (en mole) 50 %
- motifs dérivés de l'épichlorhydrine 50 %
- Tg - 39,3°C
- Tm --
- % cristallinité --

### Exemple 5

Ce copolymère 5 est fourni par Siber Hegner & Cie France (Epichlomer D® et présente les caractéristiques suivantes:
- motifs dérivés de l'éthylène oxyde (en mole) 55,9 %
- motifs dérivés de l'épichlorhydrine 44,1 %
- TG - 40,4°C
- Tm --
- % cristallinité --

### B - Préparation des films d'électrolytes polymères solides

On prépare une solution de copolymère dans l'acétonitrile et l'on ajoute :
- MgO, CaCO₃ ou Li₂C O₃ en tant que charges,
- l'acide trithiocyanurique comme réticulant,
- le di(trifluorométhyl)sulfonate amidure de lithium de formule (CF₃ SO₂)₂ N-Li⁺ en abrégé LiTFSI.

Le rapport entre le réticulant et le taux de Cl est de 7,7/1000 en mole. Le rapport équivalent molaire CO₃/mole de réticulant est égal à 10/1. Le rapport équivalent molaire d'oxygène/mole de lithium est égal à 20.

Les films sont préparés à partir des solutions des polymères contenant, toutes, les additifs.

Les copolymères sont solubilisés dans de l'acétonitrile (1:10), et le LiTFSI est ajouté. Les additifs inorganiques et le réticulant sont dispersés dans le même solvant par ultra-son. La dispersion est ajoutée à la solution, dégazée sous vide pour éliminer l'air qui pourrait donner des défauts sur le film. La solution est étalée sur des plaques du verre avec du papier-teflon à l'aide de microcouteau. Après évaporation complète du solvant, les films sont réticulés dans un four thermostaté. La fin de réticulation est suivie par tests de solubilisation dans du dichlorométhane.

Les caractéristiques thermiques (température de fusion, température de transition vitreuse, chaleur de fusion) des polymères sont étudiées par DSC (Perkin Elmer4). Les mesures ont été réalisées en effectuant une première chauffe des échantillons de -90° à environ +80°C, à une vitesse de 10°C/min., suivie d'un refroidissement rapide (-260°C à la température de départ et d'une seconde chauffe (10°C/min.) au cours de laquelle ont été enregistrés les thermogrammes. Les températures de fusion (T_{f}) sont les températures correspondant au sommet des pics endothermiques de fusion. Les chaleurs de fusion (AHf) ont été déterminées à partir des aires formées par les pics de fusion et la ligne de base.

Les taux de cristallinité des polymères ont été calculés par rapport au POE pur traité dans les mêmes conditions, dont la chaleur de fusion est de 199,9J/or (47,8 cal/gr). Cette valeur est retenue comme référence pour le POE 100 % cristallin. Les valeurs obtenues permettent de comparer dans des conditions uniformes la cristallinité des différents polymères.

On récapitule ci-après les conditions de préparation des films et leurs caractéristiques.

| | 1 | 2 | 3 | 4 | 5 |
|---|---|---|---|---|---|
| Copolymère (en g) | 10 | 10 | 10 | 20 | 20 |
| Acétonitrile (en ml) | 100 | 100 | 100 | 200 | 200 |
| MgO (en g) | - | - | - | - | - |
| CaCO₃ (en g) | - | - | - | - | - |
| Li₂ C O₃ (en g) | 0,16 | 0,14 | 0,12 | 0,83 | 0,49 |
| réticulant (en g) | 0,039 | 0,033 | 0,028 | 0,2 | 0,12 |
| LITFSI (en g) | 0,48 | 0,48 | 0,48 | 0,96 | 0,96 |
| Epaisseur (en µm) | 60 | 70 | 70 | 120 | 90 |
| Tg (en °C) | - 49 | - 56 | - 51,8 | | |
| % de cristallinité | 13,5 | 13,6 | 11,5 | | |

### Propriétés électrochimiques

La mesure de conductivité ionique des films préparés est effectuée par spectroscopie d'impédance. Cette méthode permet de séparer les phénomènes liés aux électrolytes polymères et ceux liés aux interfaces électrolyte/électrodes. Les mesures sont effectuées sur des cellules Li/électrolyte/Li (électrodes non bloquantes) pour les polymères 1, 2, 3, 5 et sur des cellules inox/électrolyte/inox (électrodes bloquantes) pour le polymère 4, en utilisant le courant alternatif à différentes températures et en appliquant des fréquences entre 10mHz et 100mHz.

Les cellules avec les électrodes de lithium sont confectionnées dans une boite à gants sous air sec, par le calandrage sous 5 bars à 180°C. La surface active dans tous les cas est de 7,07 cm². L'épaisseur varie entre 40 et 100 µm, elle est mesurée avec un palpeur électronique dans la boite à gants sur les films secs.

La figure 2 annexée présente un schéma des cellules 7 ayant servi à cette étude:
8 - collecteur de nickel
9 - électrode de lithium
10 - électrolyte
11 -séparateur.

Les résultats sont indiqués ci-dessous:
R1: résistance en ohm
Rs: résistance de seuil en ohm
conductivité de l'électrolyte en S.cm⁻¹
Impédance totale en ohm.

| Film de copolymère 1 - Epaisseur 60 µm | | | | |
|---|---|---|---|---|
| T(°C) | R1 | Conductivité de l'électrolyte | impéd. totale | Rs |
| 20 | 251 | 3,4.10⁻⁶ | 574 | 323 |
| 40 | 79,0 | 1,1.10⁻⁵ | 133 | 54 |
| 60 | 39,0 | 2,2.10⁻⁵ | 57 | 18 |
| 80 | 20,0 | 4,2.10⁻⁵ | 24 | 4 |
| 90 | 15,0 | 5,7.10⁻⁵ | 17 | 2 |

| Film de copolymère 2 - Epaisseur 70 µm | | | | |
|---|---|---|---|---|
| T(°C) | R1 | Conductivité de l'électrolyte | impéd. totale | Rs |
| 25 | | | | |
| 40 | 97,0 | 9,5.10⁻⁶ | 156 | 59 |
| 60 | 25,0 | 3,7.10⁻⁵ | 36 | 11 |
| 80 | 14,9 | 6,2.10⁻⁵ | 18 | 3 |
| 90 | | | | 0 |

| Film de copolymère 3 - Epaisseur 70 µm | | | | |
|---|---|---|---|---|
| T(°C) | R1 | Conductivité de l'électrolyte | impéd. totale | Rs |
| 25 | 240 | 3,8.10⁻⁶ | 574 | 334 |
| 40 | 58,0 | 1,6.10⁻⁵ | 114 | 56 |
| 60 | 14,6 | 6,3.10⁻⁵ | 27 | 12 |
| 80 | 9,0 | 1,0.10⁻⁴ | 13 | 4 |
| 90 | 6,6 | 1,4.10⁻⁴ | 8,4 | 2 |

| Film de copolymère 4 - Epaisseur 120 µm | |
|---|---|
| T(°C) | Conductivité de l'électrolyte |
| 60 | 2.10⁻⁶ |
| 80 | 3,1.10⁻⁵ |

| Film de copolymère 5 - Epaisseur 90 µm | | | | |
|---|---|---|---|---|
| T(°C) | R1 | Conductivité de l'électrolyte | impéd, totale | Rs |
| 60 | 337,0 | 3,8.10⁻⁶ | 412 | 75,0 |
| 80 | 187,0 | 6,8.10⁻⁶ | 196 | 9,0 |

D'autres films ont été réalisés avec le copolymère 4 (cf. exemple 4) avec comme agent réticulant la Jeffamine ED-600 [poly(propylène glycol-b-éthylène glycol-b-propylène glycol)]bis(2-aminopropyl éther) de poids moléculaire d'environ 600 et le LiTFSI comme sel électrolyte. Le rapport molaire entre le réticulant et le taux de Cl varie de 5 % pour le film 4a à 12,5% pour le film 4b ; à 25 % pour le film 4c ; à 50 % pour le film 4d.
C'est-à-dire que :
- le film 4a réalisé avec le copolymère 4 comprend 0,10 équivalent molaire radical amino pour 1 équivalent molaire chlore,
- le film 4b réalisé avec le copolymère 4 comprend 0,25 équivalent molaire radical amino pour 1 équivalent molaire chloro,
- le film 4c réalisé avec le copolymère 4 comprend 0,50 équivalent molaire radical amino pour 1 équivalent molaire chloro,
- le film 4d réalisé avec le copolymère 4 comprend 1 équivalent molaire radical amino pour un équivalent molaire chloro.

Le rapport équivalent molaire CO₃/mole de réticulant est de 3/1. Le rapport équivalent molaire d'oxygène du copolymère/mole de lithium est égal à 20.

Cette préparation est identique à celle décrite précédemment.

Le copolymère est solubilisé dans l'acétonitrile (1:10) et le sel électrolyte est ajouté à la solution. Le Li₂CO₃ est dispersé dans le même solvant par ultra-son et la jeffamine est ajoutée à cette suspension qui est ensuite versée sur la solution de copolymère. La solution est dégazée sous vide afin d'éliminer l'air qui pourrait donner des défauts au film puis elle est étalée sur des plaques de verre avec du papier Téflon à l'aide de microcouteau et on laisse sécher à l'air libre. Après évaporation complète du solvant, les films sont réticulés dans un four thermostaté 60 minutes à 120°C ou 30 minutes à 140°C ; la fin de la réticulation est suivie par des tests de solubilisation dans du dichlorométhane.

### Exemple : Préparation du film 4c

5,601 gr de copolymère(3,7 x 10⁻² moles EP)
5,46 gr de réticulant (9,1 x 10⁻³ moles)
2,0 gr de Li₂CO₃(2, 73 x 10⁻² moles)
1,201 gr de LiTFSI([o]/[Li] =20) [o] / [Li]

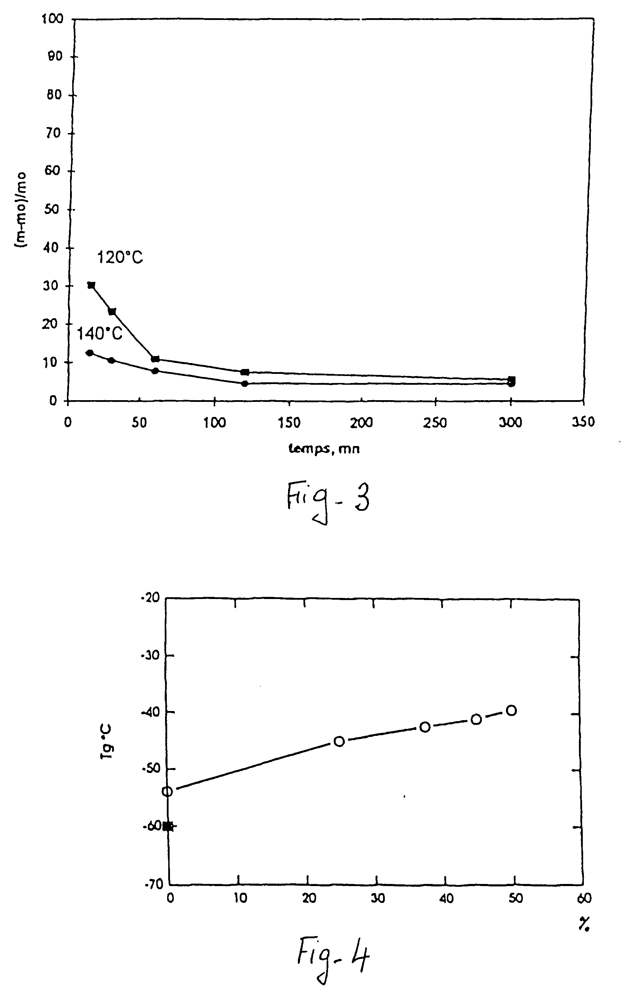

La figure 3 (annexée) montre l'évolution du Taux de gonflement dans l'acétonitrile de ce film en fonction du temps et de la température de réticulation.

### Propriétés thermiques

L'analyse thermique des films électrolytes est réalisée par calorimétrie différentielle à balayage sur Perkin Elmer 7. Les mesures ont été réalisées sous atmosphère inerte en effectuant une première chauffe des échantillons de -100°c à +100°c, à une vitesse de 20°c/min, suivie d'un refroidissement rapide à la température de départ et d'une deuxième ou troisième chauffe à 20°c au cours de laquelle ont été enregistrés les thermogrammes permettant la détermination des températures de transition vitreuse (Tg), les températures et les chaleurs fusion des échantillons.

Le tableau ci-après résume les conditions de préparation des films et leurs caractéristiques.

| | 4a | 4b | 4c | 4d |
|---|---|---|---|---|
| (EP) | 0.038 moles | 0.041 moles | 0.037 moles | 0.037 moles |
| Jeffamine ED-600 | 0.0019 moles | 0.0051 moles | 0.009 moles | 0.018 moles |
| Li₂CO₃ | 0.0054 moles | 0.0153 moles | 0.027 moles | 0.054 moles |
| LiTFSi (O/Li) | 20 | 20 | 20 | 20 |
| Epaisseur (µm) | 850-820 | 920-980 | 830-920 | 1451-1810 |
| Tg mesurée | -41.0°C | -42.5°C | -45.0°C | -53.9°C |
| Taux de cristallinité | 0 | 0 | 0 | 0 |

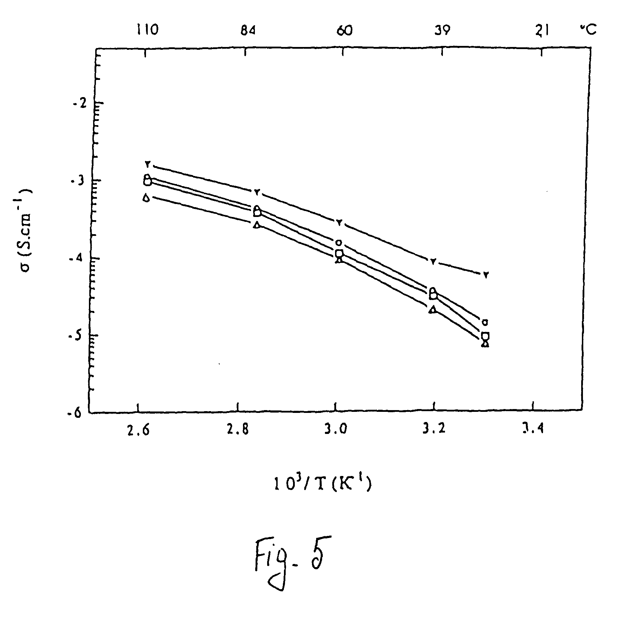

La figure 4 présente l'évolution de la température de transition vitreuse Tg des films électrolytes préparés ci-dessus en fonction de la quantité théorique des Cl restant sur le copolymère. Le copolymère non réticulé contient 50 % molaire de chlore.

Le symbole ■ indique la Tg d'un film de polyéthylène oxyde de référence sans sel.

### Propriétés électrochimiques

La conductivité ionique des électrolytes polymères est évaluée par la méthode de l'impédance complexe largement utilisée car elle permet de séparer les phénomènes liés à l'électrolyte polymère à ceux liés aux interfaces électrolyte / électrodes. Les mesures ont été effectuées sur une cellule à électrodes bloquantes ; elle est conçue de façon à permettre l'élimination de toutes les traces d'eau et de solvants volatils, et le maintien du vide pendant la mesure. L'échantillon de 10 mm de diamètre et d'épaisseur variable est pressé ente deux électrodes en acier inoxydable poli, placés dans un porte échantillon en tétrafluoroéthylène qui est disposé au fond d'une cellule étanche. Le tracé du diagramme d'impédance complexe est obtenu par un analyseur de fonction de transfert Solartron 1260 (Schlumberger) ; la plage de fréquence de mesure s'étale de 1 Hz à 1 Mhz.

Les résultats des mesures sont indiqués dans le tableau ci-dessous :

| 1. Film 4a (épaisseur : 0,036 cm ; surface : 1,43 cm²) | | |
|---|---|---|
| Température (°C) | Résistance (ohms) | Conductivité (S.cm⁻¹) |
| 30 | 3,3 x 10³ | 7,59 x 10⁻⁶ |
| 40 | 1,2 x 10³ | 2,08 x 10⁻⁵ |
| 60 | 263,1 | 9,51 x 10⁻⁵ |
| 80 | 93,9 | 2,66 x 10⁻⁴ |
| 110 | 38,9 | 6,43 x 10⁻⁴ |

| 2. Film 4b (épaisseur : 0,048 cm ; surface : 1,168 cm²) | | |
|---|---|---|
| Température (°C) | Résistance (ohms) | Conductivité (S.cm⁻¹) |
| 30 | 4,39 x 10 | 9,43 x 10⁻⁶ |
| 40 | 1,32 x 10 | 3,15 x 10⁻⁵ |
| 60 | 362, 8 | 1,14 x 10⁻⁴ |
| 80 | 109,3 | 3,79 x 10⁻⁴ |
| 110 | 42,6 | 9,73 x 10⁻⁴ |

| 3. Film 4c (épaisseur: 0,085 cm ; surface : 0,84 cm²) | | |
|---|---|---|
| Température (°C) | Résistance (ohms) | Conductivité (S.cm⁻¹) |
| 30 | 7,26 x 10³ | 1,39 x 10⁻⁵ |
| 40 | 2,8 x 10³ | 3,61 x 10⁻⁵ |
| 60 | 662 | 1,53 x 10⁻⁴ |
| 80 | 239 | 4,22 x 10⁻⁴ |
| 110 | 90,5 | 1,12 x 10⁻⁴ |

| 4. Film 4d (épaisseur : 0,14 cm ; surface : 0,865 cm²) | | |
|---|---|---|
| Température (°C) | Résistance (ohms) | Conductivité (S.cm⁻¹) |
| 30 | 2,83 x 10³ | 5,72 x 10⁻⁵ |
| 40 | 1,87 x 10³ | 8,63 x 10⁻⁵ |
| 60 | 585,3 | 2,76 x 10⁻⁴ |
| 80 | 239,5 | 6,76 x 10⁻⁴ |
| 110 | 102,0 | 1,59 x 10⁻³ |

La figure 5 montre l'évolution de la conductivité des films électrolytes en fonction de la température en relation avec la quantité de réticulant (Jeffamine ED600)) introduite dans le copolymère.
▼4d
○ 4c
□ 4b
Δ 4a

## Revendications

1. Electrolyte polymère solide **caractérisé en ce qu'**il comprend d'une part une matrice formée, au moins on partie, de copolymère réticuló comprenant des motifs dérivés de l'oxyde d'éthylène et des motifs dérivés de l'oxyde d'éthylène substitué par un radical réactif par substitution nucléophilique et dont au moins une partie participe à la liaison de réticulation, d'autre part au moins un sel alcalin ionisable complexé dans ladite matrice.

2. Electrolyte polymère solide selon la revendication 1, **caractérisé en ce que** l'oxyde d'éthylène substitué par un radical réactif par substitution et participant à la liaison de réticulation répond à la formule : 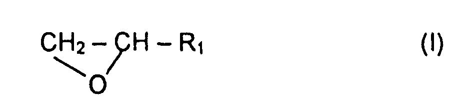 dans laquelle R₁ est choisi dans le groupe constitué par le radical chlorométhyle, bromométhyle, iodométhyle.

3. Electrolyte polymère solide selon la revendication 2, **caractérisé en ce que** R₁ est le radical chlorométhyle.

4. Electrolyte polymère solide selon l'une des revendications 1 à 3, **caractérisé en ce que** ledit copolymère réticulé résulte de la réticulation d'un copolymère statistique de formule : 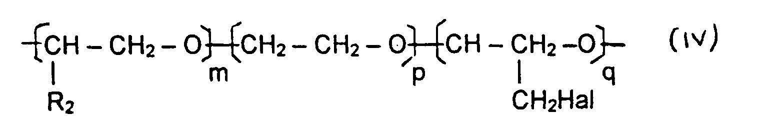 Hal est l'atome de chlore, de brome ou d'iode, notamment le chlore,
R₂ est un radical C₁-C₄ alkyle.

5. Electrolyte polymère solide selon la revendication 4, **caractérisé en ce que**, en pourcentage en mole :
p est compris entre 50 et 97 %, de préférence 70 et 95 %
q est compris entre 3 et 50 %, de préférence 5 et 30 %
m est compris entre 0 et 10 %.

6. Electrolyte polymère solide selon la revendication 5, **caractérisé en ce que**, en pourcentage en mole :
p est compris entre 80 et 95 %
q est compris entre 5 et 20 %.

7. Electrolyte polymère solide selon l'une des revendications 4, 5 ou 6, **caractérisé en ce que** les atomes d'halogène ne participant pas à la réticulation sont remplacés par des radicaux de faible encombrement stérique, notamment le radical amine ou thioéther ou de formule :
CH₃―(OCH₂CH₂)ₙ₁―X, X est un groupe nucléophile n₁ = 1 à 10.

8. Electrolyte polymère solide selon l'une des revendications 4 à 7, résultant de la réticulation du copolymère par un agent réticulant comprenant au moins deux fonctions thiols, notamment l'acide trithiocyanurique ou par un agent réticulant comprenant deux fonctions amines, notamment du type bis(aminopropyléther), éventuellement en présence d'un accélérateur ou ralentisseur de réticulation.

9. Electrolyte polymère solide selon la revendication 8, **caractérisé en ce qu'**il résulte de la réticulation du copolymère par 1 à 10 mole d'agent réticulant trivalent pour 1000 équivalents d'atomes d'halogène.

10. Electrolyte polymère solide selon la revendication 8, **caractérisé en ce que** l'agent réticulant est une diamine de formule Y―(EO)ₙ₂―Y dans laquelle Y est un radical NH₂, pyridine, piperazine, pipéridine, E est un radical éthylène ou propylène, n₂ est compris entre 5 et 20 et **en ce que** le copolymère réticulé résulte de la réticulation du copolymère de formule IV par une proportion d'agent réticulant diamine telle que le rapport équivalent molaire radical réactif par substitution/équivalent molaire radical amine soit inférieur ou égal à 1, de préférence compris entre 0,5 et 1.

11. Electrolyte polymère solide selon l'une des revendications précédentes, **caractérisé en ce que** la température de transition vitreuse est égale ou inférieure à -40°C, le degré de cristallinité est inférieur à 40 % et la conductivité est supérieure à 5.10⁻⁶ S.cm⁻¹ à 20 °C ou plus.

12. Electrolyte polymère solide selon l'une des revendications 1 à 11, **caractérisé en ce que** les anions associés aux cations métalliques alcalins sont choisis dans le groupe constitué par les perfluorosulfonates, les perfluorosulfonates imidures, BF₄-, PF₆-, AsF₆-, ClO₄-, SCN⁻,I⁻, Br⁻, (C₆H5)₄ B' ainsi que ses dérivés, BCl₄⁻.

13. Electrolyte polymère solide selon la revendication 12, **caractérisé en ce que** le cation métallique est le cation lithium.

14. Electrolyte polymère solide selon l'une des revendications précédentes, **caractérisé en ce que** la matrice comprend une ou plusieurs charges minérales.

15. Electrolyte polymère solide selon la revendication 14, **caractérisé en ce que** la charge minérale est choisie dans le groupe constitué par MgO, Al₂O₃, CaO, Li₂CO₃ CaCO₃, du verre sous forme de fibres ou de microbilles, ou un mélange d'une ou plusieurs de ces charges.

16. Electrolyte polymère solide selon la revendication 1, 12, 13, **caractérisé en ce qu'**il comprend une proportion en gramme de sel alcalin ionisable comprise entre 1 et 100 g pour 100 g de copolymère.

17. Ensemble électrochimique multicouche (1) formé d'une électrode positive (2) et de son collecteur de courant (6), de l'électrode négative (3) et éventuellement de son collecteur de courant (5), lesdites électrodes étant séparées par un électrolyte polymère solide (4) selon l'une des revendications 1 à 16.

18. Ensemble électrochimique multicouche selon la revendication 17, **caractérisé en ce que** l'électrode positive comprend une matrice selon l'une des revendications 1 à 11, 14 et 15, une matière active, un composé inerte à conduction électronique.

19. Ensemble électrochimique multicouche selon l'une des revendications 17 ou 18, **caractérisé en ce que** l'électrode négative est formée d'une couche de lithium.

## Claims

1. Solid polymeric electrolyte, **characterized in that** it comprises, on the one hand, a matrix formed, at least partly, from crosslinked copolymer comprising units derived from ethylene oxide and units derived from ethylene oxide substituted with a radical which is reactive by nucleophilic substitution and at least some of which is involved in the crosslinking bonding, and, on the other hand, at least one ionizable alkaline salt complexed in the said matrix.

2. Solid polymeric electrolyte according to Claim 1, **characterized in that** the ethylene oxide substituted with a radical which is reactive by substitution and which is involved in the crosslinking bonding corresponds to the formula: 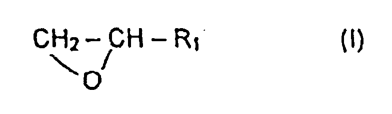 in which R₁ is chosen from the group consisting of the chloromethyl, bromomethyl or iodomethyl radical.

3. Solid polymeric electrolyte according to Claim 2, **characterized in that** R₁ is the chloromethyl radical.

4. Solid polymeric electrolyte according to one of Claims 1 to 3, **characterized in that** the said crosslinked copolymer results from the crosslinking of a random copolymer of formula: 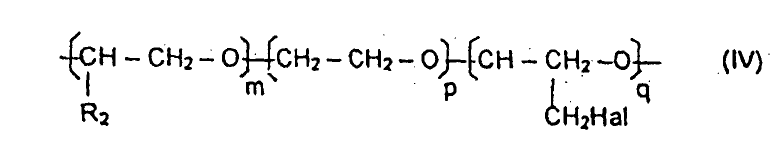 Hal is a chlorine, bromine or iodine atom, in particular chlorine,
R₂ is a C₁-C₄ alkyl radical.

5. Solid polymeric electrolyte according to Claim 4, **characterized in that**, as a molar percentage:
p is between 50 and 97%, preferably 70 and 95%,
q is between 3 and 50%, preferably 5 and 30%,
m is between 0 and 10%.

6. Solid polymeric electrolyte according to Claim 5, **characterized in that**, as a molar percentage:
p is between 80 and 95%
q is between 5 and 20%.

7. Solid polymeric electrolyte according to one of Claims 4, 5 and 6, **characterized in that** the halogen atoms which are not involved in the crosslinking are replaced with radicals of low steric bulk, in particular the amine or thioether radical or the radical of formula:
CH₃-(OCH₂CH₂)ₙ₁-X, X is a nucleophilic group and n₁ = 1 to 10.

8. Solid polymeric electrolyte according to one of Claims 4 to 7, resulting from the crosslinking of the copolymer with a crosslinking agent comprising at least two thiol functions, in particular trithiocyanuric acid, or with a crosslinking agent comprising two amine functions, in particular of the bis(aminopropyl ether) type, optionally in the presence of a crosslinking accelerator or retardant.

9. Solid polymeric electrolyte according to Claim 8, **characterized in that** it results from the crosslinking of the copolymer with 1 to 10 mol of trivalent crosslinking agent per 1000 equivalents of halogen atoms.

10. Solid polymeric electrolyte according to Claim 8, **characterized in that** the crosslinking agent is a diamine of formula Y-(EO)ₙ₂-Y in which Y is an NH₂, pyridine, piperazine or piperidine radical, E is an ethylene or propylene radical and n₂ is between 5 and 20, and **in that** the crosslinked copolymer results from the crosslinking of the copolymer of formula IV with a proportion of diamine crosslinking agent such that the ratio: molar equivalent of radical which is reactive by substitution/molar equivalent of amine radical, is less than or equal to 1, preferably between 0.5 and 1.

11. Solid polymeric electrolyte according to one of the preceding claims, **characterized in that** the glass transition temperature is less than or equal to -40°C, the degree of crystallinity is less than 40% and the conductivity is greater than 5 x 10⁻⁶ S.cm⁻¹ at 20°C or more.

12. Solid polymeric electrolyte according to one of Claims 1 to 11, **characterized in that** the anions associated with the alkali metal cations are chosen from the group consisting of perfluorosulfonates, perfluorosulfonate imides, BF₄⁻, PF₆⁻, AsF₆⁻, ClO₄⁻, SCN⁻, I⁻, Br⁻, (C₆H5)₄B⁻ and derivatives thereof, and BCl₄⁻.

13. Solid polymeric electrolyte according to Claim 12, **characterized in that** the metal cation is the lithium cation.

14. Solid polymeric electrolyte according to one of the preceding claims, **characterized in that** the matrix comprises one or more mineral fillers.

15. Solid polymeric electrolyte according to Claim 14, **characterized in that** the mineral filler is chosen from the group consisting of MgO, Al₂O₃, CaO, Li₂CO₃, CaCO₃, glass in the form of fibers or microbeads, or a mixture of one or more of these fillers.

16. Solid polymeric electrolyte according to Claim 1, 12 or 13, **characterized in that** it comprises a proportion, in grams, of ionizable alkaline salt of between 1 and 100 g per 100 g of copolymer.

17. Multilayer electrochemical assembly (1) formed from a positive electrode (2) and its current collector (6), the negative electrode (3) and optionally its current collector (5), the said electrodes being separated by a solid polymeric electrolyte (4) according to one of Claims 1 to 16.

18. Multilayer electrochemical assembly according to Claim 17, **characterized in that** the positive electrode comprises a matrix according to one of Claims 1 to 11, 14 and 15, an active material and a compound which is inert to electronic conduction.

19. Multilayer electrochemcial assembly according to either of Claims 17 and 18, **characterized in that** the negative electrode is formed from a layer of lithium.

## Patentansprüche

1. Festpolymerelektrolyt, **dadurch gekennzeichnet, dass** er einerseits eine Matrix, die zumindest teilweise aus vernetztem Copolymer gebildet ist, welches Einheiten, die von Ethylenoxid abgeleitet sind, und Einheiten umfasst, die von Ethylenoxid abgeleitet sind, das durch nukleophile Substitution durch einen reaktiven Rest substituiert ist, und von denen mindestens ein Teil an der Vernetzungsbindung teilnimmt, und andererseits mindestens ein in einen Komplex überführtes ionisierbares Alkalisalz in der Matrix umfasst.

2. Festpolymerelektrolyt nach Anspruch 1, **dadurch gekennzeichnet, dass** das Ethylenoxid, das durch Substitution durch einen reaktiven Rest substituiert ist und an der Vernetzungsbindung teilnimmt, die Formel: 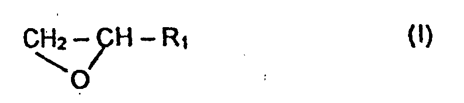 aufweist, in der R₁ ausgewählt ist aus der Gruppe bestehend aus dem Chlormethyl-, Brommethyl-, lodmethylrest.

3. Festpolymerelektrolyt nach Anspruch 2, **dadurch gekennzeichnet, dass** R₁ der Chlormethylrest ist.

4. Festpolymerelektrolyt nach einem der Ansprüche 1 bis 3, **dadurch gekennzeichnet, dass** das vernetzte Copolymer aus der Vernetzung eines statistischen Copolymers der Formel: 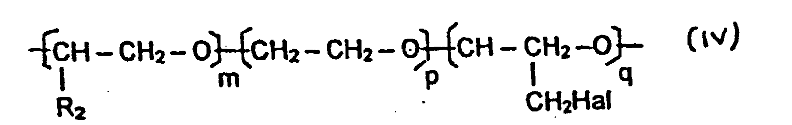 resultiert, worin Hal ein Chlor-, Brom- oder lodatom, insbesondere Chlor, darstellt, R₂ ein (C₁ - C₄)-Alkylrest ist.

5. Festpolymerelektrolyt nach Anspruch 4, **dadurch gekennzeichnet, dass**, ausgedrückt als Molprozentsatz,
p zwischen 50 und 97 % einschließlich, vorzugsweise 70 und 95 %, eingeschlossen ist,
q zwischen 3 und 50 % einschließlich, vorzugsweise 5 und 30 %, eingeschlossen ist,
m zwischen 0 und 10 % einschließlich eingeschlossen ist.

6. Festpolymerelektrolyt nach Anspruch 5, **dadurch gekennzeichnet, dass**, ausgedrückt als Molprozentsatz,
p zwischen 80 und 95 % einschließlich eingeschlossen ist,
q zwischen 5 und 20 % einschließlich eingeschlossen ist.

7. Festpolymerelektrolyt nach einem der Ansprüche 4, 5 oder 6, **dadurch gekennzeichnet, dass** die Halogenatome, die nicht an der Vernetzung teilnehmen durch Reste mit geringem sterischem Platzbedarf ersetzt sind, insbesondere durch einen Amin- oder Thioetherrest oder einen Rest der Formel:
CH₃―(OCH₂CH₂)ₙ₁―X, worin X eine nukleophile Gruppe ist, n₁ = 1 bis 10.

8. Festpolymerelektrolyt nach einem der Ansprüche 4 bis 7, der aus der Vernetzung des Copolymers mit einem Vernetzungsmittel, das mindestens zwei Thiol-Funktionen umfasst, insbesondere Trithiocyanursäure, oder mit einem Vernetzungsmittel, das zwei Amin-Funktionen umfasst, insbesondere vom Typ Bis(aminopropylether), gegebenenfalls in Anwesenheit eines Vernetzungsbeschleunigers oder -verzögerers resultiert.

9. Festpolymerelektrolyt nach Anspruch 8, **dadurch gekennzeichnet, dass** er aus der Vernetzung des Copolymers mit 1 bis 10 Mol dreiwertigem Vernetzungsmittel pro 1000 Äquivalente Halogenatome resultiert.

10. Festpolymerelektrolyt nach Anspruch 8, **dadurch gekennzeichnet, dass** das Vernetzungsmittel ein Diamin der Formel Y―(EO)ₙ₂―Y ist, in der Y ein NH₂-, Pyridin-, Piperazin-, Piperidinrest ist, E ein Ethylen- oder Propylenrest ist, n₂ zwischen 5 und 20 einschließlich eingeschlossen ist, und **dadurch gekennzeichnet, dass** das vernetzte Copolymer aus der Vernetzung des Copolymers der Formel IV mit einem solchen Anteil des Diamin-Vernetzungsmittels resultiert, dass das Verhältnis Moläquivalent durch Substitution reaktiver Rest /Moläquivalent Amin-Rest unterhalb oder gleich 1 liegt, vorzugsweise 0,5 bis 1 beträgt.

11. Festpolymerelektrolyt nach einem der vorangehenden Ansprüche, **dadurch gekennzeichnet, dass** die Glasübergangs-Temperatur weniger oder gleich - 40 °C beträgt, der Kristallisationsgrad unter 40 % liegt und die Leitfähigkeit über 5 · 10⁻⁶ S·cm⁻¹ bei 20 °C oder mehr beträgt.

12. Festpolymerelektrolyt nach einem der Ansprüche 1 bis 11, **dadurch gekennzeichnet, dass** die Anionen, die mit den Alkalimetallkationen assoziiert sind, ausgewählt sind aus der Gruppe bestehend aus Perfluorsulfonaten, Perfluorsulfonatimiden, BF₄⁻, PF₆⁻, AsF₆⁻, ClO₄⁻, SCN⁻, I⁻, Br⁻, (C₆H₅)₄B⁻ sowie dessen Derivaten, BCl₄⁻.

13. Festpolymerelektrolyt nach Anspruch 12, **dadurch gekennzeichnet, dass** das Metallkation das Lithiumkation ist.

14. Festpolymerelektrolyt nach einem der vorangehenden Ansprüche, **dadurch gekennzeichnet, dass** die Matrix einen oder mehrere mineralische Füllstoffe enthält.

15. Festpolymerelektrolyt nach Anspruch 14, **dadurch gekennzeichnet, dass** der mineralische Füllstoff ausgewählt ist aus der Gruppe bestehend aus MgO, Al₂O₃, CaO, Li₂CO₃, CaCO₃, Glas in Form in Fasern oder Mikrokügelchen oder einer Mischung von einem oder mehreren dieser Füllstoffe.

16. Festpolymerelektrolyt nach Anspruch 1, 12, 13, **dadurch gekennzeichnet, dass** er einen Anteil in Gramm des ionisierbaren Alkalisalzes umfasst, der zwischen 1 und 100 g einschließlich pro 100 g Copolymer eingeschlossen ist.

17. Elektrochemische Mehrschicht-Anordnung (1), die aus einer positiven Elektrode (2) und ihrem Stromkollektor (6), einer negativen Elektrode (3) und gegebenenfalls ihrem Stromkollektor (5) gebildet ist, wobei die Elektroden durch einen Festpolymerelektrolyt (4) gemäß einem der Ansprüche 1 bis 16 getrennt sind.

18. Elektrochemische Mehrschicht-Anordnung nach Anspruch 17, **dadurch gekennzeichnet, dass** die positive Elektrode eine Matrix nach einem der Ansprüche 1 bis 11, 14 und 15, ein aktives Material und eine für die Elektronenleitung inerte Verbindung umfasst.

19. Elektrochemische Mehrschicht-Anordnung nach einem der Ansprüche 17 oder 18, **dadurch gekennzeichnet, dass** die negative Elektrode aus einer Lithiumschicht gebildet ist.
